(19) Europäisches Patentamt
European Patent Office
Office européen des brevets

(11) **EP 0 993 860 B1**

(12) **EUROPÄISCHE PATENTSCHRIFT**

(45) Veröffentlichungstag und Bekanntmachung des Hinweises auf die Patenterteilung:
**18.04.2007 Patentblatt 2007/16**

(51) Int Cl.:
***B01D 53/94*** *(2006.01)* ***B01J 23/58*** *(2006.01)*

(21) Anmeldenummer: **99119304.6**

(22) Anmeldetag: **29.09.1999**

(54) **Verwendung eines Stickoxid-Speicherkatalysators auf der Basis von Barium- und/oder Strontiumsulfat**

Use of a nitrogen oxide storage catalyst based on barium- and/or strontium sulfate

Utilisation d'un catalyseur d'accumulation des oxydes d'azote a base de sulfate de baryum et/ou strontium

(84) Benannte Vertragsstaaten:
**AT BE CH CY DE DK ES FI FR GB GR IE IT LI LU MC NL PT SE**

(30) Priorität: **13.10.1998 DE 19847008**

(43) Veröffentlichungstag der Anmeldung:
**19.04.2000 Patentblatt 2000/16**

(73) Patentinhaber: **Umicore AG & Co. KG**
**63457 Hanau-Wolfgang (DE)**

(72) Erfinder:
• **Strehlau, Wolfgang, Dr.**
**69221 Dossenheim (DE)**
• **Göbel, Ulrich, Dr.**
**65795 Hattersheim (DE)**
• **Domesle, Rainer, Dr.**
**63755 Alzenau-Kälberau (DE)**

(74) Vertreter: **Stellbrink, Axel et al**
**Vossius & Partner**
**Siebertstrasse 4**
**81675 München (DE)**

(56) Entgegenhaltungen:
**EP-A- 0 303 495** **WO-A-97/02886**
**WO-A-97/43031**

**Beschreibung**

Die Erfindung betrifft die Verwendung eines speziellen Stickoxid-Speicherkatalysators für die Behandlung der Abgases eines magerbetriebenen verbrennungsmotors.

Stickoxid-Speicherkatalysatoren werden für die Abgasreinigung von mager betriebenen Ottomotoren, sogenannten Magermotoren, und Dieselmotoren verwendet. Diese Motoren werden mit einem überstöchiometrischen Luft/ Kraftstoff-Gemisch betrieben, das heißt der Sauerstoffgehalt dieses Gemisches ist wesentlich größer als für die vollständige Verbrennung des Kraftstoffes notwendig wäre. Dementsprechend hoch ist auch der Sauerstoffüberschuß im Abgas dieser Motoren. Aus diesem Grunde können die im Abgas enthaltenen Kohlenwasserstoffe (HC), Kohlenmonoxid (CO) und Stickoxide ($NO_x$) nicht mit den bekannten Dreiwegkatalysatoren umgesetzt werden, da diese für die gleichzeitige Umsetzung dieser Schadstoffe ein stöchiometrisch zusammengesetztes Abgas benötigen.

Aufgrund des hohen Sauerstoffgehaltes dieser Motoren können jedoch die Kohlenwasserstoffe und Kohlenmonoxid leicht durch Oxidation an einem Abgaskatalysator zu Kohlendioxid und Wasser umgesetzt werden. Die Umsetzung der Stickoxide bereitet dagegen große Schwierigkeiten. Zur Lösung dieses Problems wurden sogenannte Stickoxid-Speicherkatalysatoren vorgeschlagen. Sie enthalten basische Verbindungen, die in der Lage sind, die Stickoxide aus dem mageren Abgas zu absorbieren oder mit ihnen zu Nitraten zu reagieren und sie so aus dem Abgas zu entfernen. Geeignete Verbindungen für diesen Zweck sind die Oxide der Alkali- und Erdalkalimetalle. Diese Verbindungen liegen an Luft zum Teil in Form von Carbonaten und Hydroxiden vor, welche sich ebenfalls zur Speicherung der Stickoxide eignen.

Die Arbeitsweise von Stickoxid-Speicherkatalysatoren wird ausführlich in der SAE-Schrift SAE 950809 beschrieben. Neben den basischen Speicherverbindungen enthalten diese Katalysatoren noch Platin als katalytisch aktive Komponente, um die Stickoxide, welche zum überwiegenden Teil aus Stickstoffmonoxid bestehen, zu Stickstoffdioxid zu oxidieren, damit sie in gewünschter Weise mit den basischen Speicherverbindungen reagieren können. Die Speicherkapazität der Speicherverbindungen verringert sich mit zunehmender Abspeicherung der Stickoxide. Die Speicherverbindungen müssen daher von Zeit zu Zeit regeneriert werden. Hierzu werden das Luft/Kraftstoffgemisch und damit auch das Abgas kurzzeitig angefettet. Unter den dann vorliegenden reduzierenden Abgasbedingungen werden die gespeicherten Nitrate wieder zu Stickoxiden zersetzt und unter Verbrauch der reduktiven Bestandteile des Abgases an den katalytisch aktiven Komponenten zu Stickstoff, Wasser und Kohlendioxid umgesetzt.

Die Stickoxid-Speicherkatalysatoren werden zumeist in Form einer Beschichtung auf den Wänden der Strömungskanäle von inerten Tragkörpern in Wabenform abgeschieden. Diese sogenannten Wabenkörper sind zumeist zylindrisch geformt. Sie weisen achsenparallele Strömungskanäle für das Abgas auf, die in einem regelmäßigen Raster über den Querschnitt der Wabenkörper angeordnet sind. Die Anzahl der Strömungskanäle pro Querschnittsfläche der Wabenkörper, auch als Zelldichte bezeichnet, beträgt zwischen 10 und 200 cm$^{-2}$. Die Masse der Katalysatorbeschichtung auf dem Wabenkörper, das heißt die Beladung des Wabenkörpers mit dem Speicherkatalysator, wird zumeist als Konzentration in Gramm pro Liter Volumen (g/l) des Wabenkörpers angegeben.

Ein wesentliches Problem der bekannten Stickoxid-Speicherkatalysatoren ist ihre geringe Alterungsbeständigkeit, das heißt ihre Speicherkapazität wird aufgrund der hohen Abgastemperaturen mit zunehmender Betriebsdauer irreversibel geschädigt. Die Ursachen für diese Schädigung sind vielfältig und von der speziellen Formulierung des Speicherkatalysators abhängig.

Die Speicherverbindungen werden zumeist in hochdisperser Form auf die Oberfläche eines Trägermaterials aufgebracht, um eine ausreichende Wechselwirkung der Speicherverbindungen mit dem Abgas sicherzustellen. Ein wesentlicher Alterungsmechanismus besteht gemäß SAE Technical Paper 970746 darin, daß die Speicherverbindung mit dem Trägermaterial reagiert. So wurde bei einem Speichermaterial aus Bariumoxid auf Zirkonoxid, welches für die Dauer von 24 Stunden bei 750˚C gealtert wurde, die Bildung von Bariumzirkonat $BaZrO_3$ beobachtet. Bariumoxid auf Titanoxid führte zur Bildung von Bariumtitanat. In beiden Fällen war diese Reaktion der Speicherverbindung mit dem Trägermaterial mit einem hohen Verlust an Stickoxid-Speicherfähigkeit verbunden. Zirkonoxid und Titanoxid sind somit wegen ihrer hohen Reaktionsneigung mit Bariumoxid nicht als Träger für Alkali- und Erdalkali-Speicherverbindungen geeignet, wenn sie in der Anwendung hohen Temperaturbelastungen ausgesetzt sind. Etwas günstiger verhält sich Aluminiumoxid als Trägermaterial. Aber auch hier tritt bei längerer Alterung bei hohen Temperaturen die Bildung von Bariumaluminat auf.

In der Patentliteratur sind verschiedene Kombinationen von Speicherverbindungen und Trägermaterialien bekannt geworden, die auch das Alterungsproblem lösen sollen. So beschreibt die EP 0 562 516 A1 einen Katalysator aus Bariumoxid, Lanthanoxid und Platin auf einem Trägermaterial aus Aluminiumoxid, Zeolith, Zirkonoxid, Aluminiumsilicat oder Siliciumdioxid, wobei wenigstens ein Teil des Bariumoxids und des Lanthanoxids ein Mischoxid bilden. Durch dieses Mischoxid soll die Bildung von Lanthanaluminat unterdrückt werden, die ansonsten zur Alterung des Katalysators führt. Als Beladungskonzentration der Speicherverbindungen auf den als Tragkörper für die Katalysatorbeschichtung dienenden Wabenkörpern werden hier 0,05 bis 10,0 mol/l angegeben. Im Falle von Bariumoxid als Speicherverbindung bedeutet dies eine maximale Beladung mit bis zu 1534 g/l. Die in den Beispielen realisierten Konzentrationen liegen bei 0,15 mol Bariumoxid pro Liter Volumen der Wabenkörper, das heißt bei 23 g/l.

Zur Unterdrückung der Reaktion der Speicherverbindung mit einem Träger aus Aluminiumoxid schlägt die EP 0 645 173 A2 vor, in dem Träger Lithium derart zu lösen, daß sich eine feste Lösung aus Aluminiumoxid und Lithium bildet. Als Beladungskonzentration wird in den Beispielen 0,3 mol Bariumoxid pro Liter Volumen der Wabenkörper, also 46 g/l, angegeben.

Die EP 0 653 238 A1 schlägt als Trägermaterial Titanoxid vor, welches wenigstens ein Element aus der Gruppe der Alkalimetalle, der Erdalkalimetalle und der Seltenerdmetalle in Form einer festen Lösung enthält. Diese Schrift nennt als Beladungskonzentration für die Speicherverbindungen 0,1 mol/l und liegt damit im Rahmen der oben genannten Werte.

Die EP 0 657 204 A1 nennt als Trägermaterialien für Stickoxid-Speicherkatalysatoren die Mischoxide $TiO_2$-$Al_2O_3$, $ZrO_2$-$Al_2O_3$ und $SiO_2$-$Al_2O_3$- Darüber hinaus werden Mischoxide von $TiO_2$, $Al_2O_3$ mit Erdalkalimetallen und Seltenerdmetallen, insbesondere $TiO_2$-$Al_2O_3$-$Sc_2O_3$, $TiO_2$-$Al_2O_3$-$Y_2O_3$, $TiO_2$-$Al_2O_3$-$La_2O_3$ und $TiO_2$-$Al_2O_3$-$Nd_2O_3$, als Trägermaterialien genannt. Die in den Beispielen realisierte Beladungskonzentration mit den Speicherverbindungen liegt ebenfalls bei 0,3 mol/l.

Die EP 0 666 103 A1 beschreibt einen Katalysator, welcher auf einem porösen Trägermaterial eine Stickoxid-Speicherverbindung und ein Edelmetall enthält. Als Trägermaterialien werden Aluminiumoxid, Zeolith, Zirkonoxid, Aluminiumsilicat und Siliciumdioxid vorgeschlagen. Stickoxid-Speicherverbindung und Edelmetall werden eng benachbart auf denselben Trägerpartikeln abgeschieden. Darüber hinaus kann der Katalysator noch Ceroxid als Sauerstoff speichernde Verbindung enthalten, wobei Ceroxid vom Edelmetall und damit auch von der Stickoxid-Speicherverbindung separiert gehalten wird. Auch in dieser Schrift liegt die Beladungskonzentration für die Speicherverbindungen in den Ausführungsbeispielen bei 0,3 mol/l.

Die EP 0 718 028 A1 offenbart ein temperaturbeständiges stickoxid-Speichermaterial. Die hohe Temperaturbeständigkeit wird dadurch erhalten, daß die Stickoxid-Speicherverbindung im Trägermaterial sehr fein dispergiert wird. Hierzu wird eine Lösung einer Verbindung wenigstens eines Alkalimetalls, eines Erdalkalimetalls und eines Seltenerdmetalles mit einer Lösung eines Oxidsols wenigstens eines Metalles der Gruppen IIIb, IVa und IVb des Periodensystems gemischt und in ein Gel überführt, getrocknet und calciniert. Das resultierende Speichermaterial ist amorph. In den Beispielen wird dieses Speichermaterial unter anderem mit einem Katalysatorpulver kombiniert, welches Platin auf einem hochoberflächigen Cer/Zirkon-Mischoxid aufweist. Das Cer/Zirkon-Mischoxid bildet hier also das Trägermaterial für die Platinkomponente.

Auch die EP 0 771 584 A1 beschreibt ein temperaturbeständiges Trägermaterial für Katalysatoren, welches ebenfalls aus einem amorphen Mischoxid besteht. Das amorphe Mischoxid setzt sich aus einer Stickoxid-Speicherverbindung aus der Gruppe der Alkalimetalle, der Erdalkalimetalle und der Seltenerdmetalle sowie aus Aluminiumoxid und wenigstens aus einem Oxid aus der Gruppe Titanoxid, Zirkonoxid und Siliciumdioxid zusammen. Das Aluminiumoxid ist ein wichtiger Bestandteil des amorphen Mischoxids und steht zu den Speicherverbindungen in einem molaren Verhältnis von 4 bis 12. Das Trägermaterial kann darüber hinaus noch Ceroxid als Sauerstoff speicherndes Material enthalten. Ceroxid und Stickoxid-Speicherverbindung dürfen nur in einem molaren Verhältnis zwischen 0,5 und 3 zueinander im Trägermaterial vorliegen. Außerhalb dieser Grenzen verschlechtert sich nach Angaben der EP 0 771 584 A1 die Temperaturbeständigkeit.

Die WO 97/02886 beschreibt einen Stickoxid-Speicherkatalysator, bei dem Speicherverbindung und katalytisch aktive Komponente räumlich voneinander getrennt aber benachbart angeordnet sind. Zu diesem Zweck sind Speicherverbindung und katalytische Komponente in zwei übereinanderliegenden Schichten auf einem Tragkörper aufgebracht. Alternativ hierzu können Speicherverbindung und katalytische Komponente auf verschiedenen Trägerpartikeln abgeschieden werden, die dann gemeinsam in Form einer Beschichtung auf dem Tragkörper aufgebracht werden. Alternativ hierzu besteht nach dieser Schrift auch die Möglichkeit, die Speicherverbindung als festes, relativ grobteiliges Pulvermaterial in die Beschichtung einzubringen, wobei wenigstens 90% der Pulverpartikel Durchmesser im Bereich zwischen 5 und 15 $\mu$m aufweisen. Als Speicherverbindungen werden Metalloxide, Metallhydroxide, Metallcarbonate und Metall-Mischoxide beschrieben. Die Metalle können Lithium, Natrium, Kalium, Rubidium, Cäsium, Magnesium, Calcium, Strontium oder Barium sein. Als Beladungskonzentrationen für die Speicherverbindungen werden 0,05 bis 3 g/in$^3$, das heißt 3 bis 183 g/l, genannt. In den Ausführungsbeispielen wurden Wabenkörper mit etwa 60 g/l pulverförmigem Strontiumoxid beschichtet.

Das Speichermaterial kann gemäß der WO 97/02886 zum Schutz vor Vergiftung durch Schwefel eine Schwefel absorbierende Komponente enthalten, bevorzugt Ceroxid. Dieses Ceroxid kann in Form von Partikeln neben den Partikeln des Speichermaterials vorliegen oder in der Stickoxid-Speicherverbindung dispergiert sein.

Die EP 0 692 302 B1 offenbart ein Verfahren zur Abgasreinigung, bei dem das Abgas mit einem Katalysator in Kontakt gebracht wird, der ein poröses Trägermaterial enthält, auf dem Platingruppenmetalle und Speicherverbindungen abgeschieden sind. Die Speicherverbindungen weisen einen mittleren Partikeldurchmesser im Bereich zwischen 0,1 und 20 $\mu$m auf. Als optimale Partikeldurchmesser werden 0,5 bis 10 $\mu$m angegeben. Die Speicherverbindungen werden als Pulvermaterialien der Beschichtungsdispersion für den Speicherkatalysator zugefügt. Damit ihre Teilchenstruktur in der wäßrigen Beschichtungsdispersion erhalten bleibt, werden in Wasser unlösliche Speicherverbindungen aus der Gruppe Bariumcarbonat, Bariumoxalat und Bariumolenat verwendet. Wird eine Dispersion in einem organischen Medium verwendet, so können auch Bariumacetat, Bariumformiat, Bariumcitrat, Bariumoxid, Bariumnitrat, Bariumnitrat, Bariumhydroxid oder Bariumtartrat eingesetzt werden. Die Beladungskonzentration eines Wabenkörpers mit diesen Speicherverbindungen wird wieder mit 0,3 mol/l angegeben. Durch die Partikelgröße von mehr als 0,1 μm soll die unerwünschte Reaktion der Speicherverbindung mit den im Abgas enthaltenen Schwefeloxiden unterdrückt werden.

Die aus dem Stand der Technik bekannten Stickoxid-Speicherkatalysatoren weisen immer noch eine unzureichende Stabilität ihrer Speicherkapazität über längere Betriebsdauern auf. Die Alterung kann zum Beispiel durch eine Reaktion der Speicherverbindungen mit den Trägermaterialien hervorgerufen werden, was zu einem Verlust an Basizität und damit an Speicherkapazität führt. Auch bei fehlender Reaktionsneigung zwischen Speicherverbindung und Trägermaterial kann es zu einer Verminderung der Speicherkapazität durch eine Abnahme der spezifischen Oberfläche des Speichermaterials kommen.

Ein weiterer Alterungsvorgang wurde von den Erfindern bei solchen Speicherkatalysatoren beobachtet, bei denen zum Beispiel das Platin in direkten Kontakt mit Bariumoxid kommt. Dies ist immer dann der Fall, wenn Bariumoxid durch Imprägnieren des Katalysators mit einer löslichen Vorstufe von Bariumoxid eingebracht wird. Wie durch eingehende Untersuchungen nachgewiesen wurde, zeigen solche Speicherkatalysatoren eine hervorragende Frischaktivität. Bei zu starker Beladung des Katalysatormaterials wird jedoch die katalytische Aktivität des Platins für die Umsetzung von Stickstoffmonoxid zu Stickstoffdioxid unter oxidierenden Bedingungen, insbesondere nach Alterung des Katalysators beeinträchtigt. Diese Beobachtung beruht wahrscheinlich auf einer Reaktion zwischen Platin und Bariumoxid. Im Falle eines in Form einer Beschichtung auf einem Wabenkörper aufgebrachten Stickoxid-Speicherkatalysators sollte daher die nachträgliche Beladung des Katalysators mit den Speicherverbindungen durch Imprägnierung auf unter 20 g/l beschränkt werden.

Ein vierter, jedoch weitgehend reversibler, Alterungsvorgang ist die Reaktion der Speicherverbindungen mit den im Abgas enthaltenen Schwefeloxiden zu thermisch relativ stabilen Sulfaten. Die Sulfate können bei Abgastemperaturen über 550°C und stöchiometrischen oder fetten Abgaszusammensetzungen unter Freisetzung von Schwefeloxiden und Rückbildung der Speicherverbindungen zersetzt werden.

Durch die beschriebenen Alterungsmechanismen nimmt die Speicherkapazität der Speicherkatalysatoren mit zunehmender Betriebsdauer kontinuierlich ab und fällt schließlich unter die für einen einwandfreien Betrieb notwendige Speicherkapazität.

Eine Lösung dieses Problems könnte darin bestehen, die Beladung des Speicherkatalysators mit den Speicherverbindungen zu erhöhen, um somit die Betriebsdauer zu verlängern, innerhalb derer die Speicherkapazität auf einen Wert abfällt, der für eine einwandfreie Funktion des Speicherkatalysators unerläßlich ist. Bei geträgerten Speicherverbindungen steht dem jedoch entgegen, daß die gängigen Wabenkörper bei vertretbarem Aufwand nur mit Beschichtungskonzentrationen von bis zu 400 g/l beladen werden können. Höhere Beladungen sind nur mit aufwendigen Mehrfachbeschichtungen möglich und bergen immer die Gefahr von verstopften Strömungskanälen in sich.

Etwa die Hälfte der zur Verfügung stehenden Beschichtungskonzentration wird durch das Katalysatormaterial in Anspruch genommen, um eine ausreichende Umsetzungsrate von Stickstoffmonoxid zu Stickstoffdioxid zu gewährleisten. Da bei geträgerten Speicherverbindungen die Speicherverbindungen selbst nur ca. 20 Gew.-% des Trägermaterials ausmachen, ist die auf diese Weise erreichbare Konzentration an Speicherverbindungen auf den Wabenkörpern auf etwa 20 bis 40 g/l begrenzt.

Auch die nachträgliche Imprägnierung der fertigen Beschichtung mit Vorläuferverbindungen zusätzlicher Speicherverbindungen kann nur im begrenzten Umfang eingesetzt werden, da gemäß den diskutierten Alterungsvorgängen hierbei die Gefahr besteht, daß die katalytisch aktiven Platinmetalle durch die Speicherverbindungen in ihrer katalytischen Aktivität eingeschränkt werden.

Die alternativ zu den geträgerten Speicherverbindungen eingesetzten festen, partikelförmigen Speicherverbindungen ermöglichen zwar in der Praxis eine höhere Menge an Speicherverbindungen in den Stickoxid-Speicherkatalysator einzubringen, haben aber den Nachteil, daß sie von vornherein um Größenordnungen grobkörniger sind als die gealterten Speicherpartikel auf den Trägermaterialien. Sie weisen daher nur eine geringe Oberfläche für die Wechselwirkung mit dem Abgas auf. Ihre theoretische, molare Speicherkapazität kann also nur teilweise genutzt werden.

Die EP 0 303 495 B1 beschreibt einen Katalysator, welcher a) ein aktives Aluminiumoxid, b) einen im wesentlichen in Wasser unlöslichen Stabilisator aus der Gruppe Strontiumsulfat und Bariumsulfat in einer Menge von 0,5 bis 50 Gew.-%, bezogen auf das Gewicht des aktiven Aluminiumoxids, und c) eine auf dem aktiven Aluminiumoxid dispergierten katalytisch aktiven Komponente, enthält. Die Partikel des Stabilisators haben bevorzugt eine Korngröße von mehr als 0,1 μm. Der Katalysator wird als Dreiwegkatalysator eingesetzt und ermöglicht die gleichzeitige Umsetzung der in einem stöchiometrisch zusammengesetzten Abgas enthaltenen Schadstoffe Kohlenmonoxid, Kohlenwasserstoffe und Stickoxide. Er zeichnet sich durch eine gute Temperaturbeständigkeit aus. Die gute Temperaturbeständigkeit wird dadurch erzielt, daß zum Beispiel das Barium aus den Bariumsulfatpartikeln bei hohen Abgastemperaturen bis 1100°C in die benachbarten Partikel des aktiven Aluminiumoxids diffundiert und dessen spezifische Oberfläche stabilisiert. Der Katalysator gemäß dieser EP-Schrift wird als Dreiwegkatalysator in einem stöchiometrisch zusammengesetzten Abgas eingesetzt. Ein Betrieb im mageren Abgas von Magermotoren mit abwechselndem Speichern und Freisetzen der Stickoxide ist nicht vorgesehen und würde auch scheitern, da die Bariumkomponente zur Stabilisierung der Aluminiumoxidpartikei verbraucht wird.

Die DE 197 39 925 A1 beschreibt einen Abgasreinigungskatalysator für ein Dieselrußfilter, der die Verbrennungstemperatur des Rußes vermindert. Der Katalysator besteht aus einem Metalloxid, mindestens einem Alkalimetallsulfat der aus den Sulfaten von Li, Na, K, Rb und Cs bestehenden Gruppe und/oder mindestens einem Erdalkalimetallsulfat der aus Sulfaten von Be, Mg, Ca, Sr und Ba bestehenden Gruppe. Eine alternierende Speicherung und Freisetzung der im Dieselabgas enthaltenen Stickoxide ist mit dem Dieselrußfilter nicht vorgesehen.

Die WO 95/09687 offenbart ein Verfahren zur Entfernung von Kohlenmonoxid, Kohlenwasserstoffen und Stickoxiden aus sauerstoffreichen Abgasen an einem geträgerten Edelmetallkatalysator, der in einer Gasmischung aus Sauerstoff und einem Inertgas bei Temperaturen oberhalb von 400°C vorbehandelt wurde. Dieser Katalysator weist ein breiteres Temperaturfenster für die Stickoxidreduktion auf als bekannte Katalysatoren. Der Katalysator kann Bariumsulfat enthalten. Über die mittlere Korngröße der Bariumsulfatpartikel wird keine Aussage gemacht. Das beschriebene Verfahren setzt die im Abgas enthaltenen Stickoxide kontinuierlich unter gleichzeitiger Oxidation von Kohlenmonoxid und Kohlenwasserstoffen zu Kohlendioxid, Wasser und Stickstoff um. Eine alternierende Speicherung und Freisetzung der Stickoxide findet nicht statt.

Eine Aufgabe der vorliegenden Erfindung ist es deshalb, eine Zusammensetzung für einen Stickoxid-Speicherkatalysator anzugeben, die es ermöglicht, den Speicherkatalysator mit einer höhen Konzentration an Speicherverbindungen auszurüsten, die bei bekannten Speicherkatalysatoren bisher nur durch Einbringen der Speicherverbindungen in den Katalysator in Form eines festen Pulvers mit großen Partikeldurchmessern und einer dementsprechend geringen Wechselwirkungsfläche für das Abgas möglich war. Insbesondere ist es eine Aufgabe der Erfindung, einen Stickoxid-Speicherkatalysator anzugeben, der relativ zu einem Speicherkatalysator mit nur hochdispersen Speicherverbindungen eine wesentlich höhere Beladung mit den Speicherverbindungen ermöglicht. Ein weiterer Gegenstand der Erfindung ist die Angabe eines Katalysators mit verbesserter Stabilität seiner Speicherkapazität gegenüber einer thermischen Alterung während des Betriebs des Katalysators. Die stickoxid-Speicherkatalysatoren sollen für die Reinigung des Abgases von Magermotoren mit wechselnder magerer und fetter Abgaszusammensetzung verwendet werden.

Demgemäß betrifft die vorliegende Erfindung die Verwendung eines Stickoxid-Speicherkatalysators für die Behandlung des Abgases eines mager betriebenen Verbrennungsmotors mit wechselnder magerer und fetter Abgaszusammensetzung, wobei der Stickoxid-Speicherkatalysator wenigstens ein feinteiliges Katalysatormaterial mit einem mittleren Partikeldurchmesser zwischen 1 und 5 $\mu$m ausgewählt aus katalytisch aktiven Komponenten, Trägermaterialien, Sauerstoff speichernden Materialien und Promotern, sowie wenigstens eine Stickoxid-Speicherkomponente enthält, wobei die Stickoxid-Speicherkomponente nach Abschluß der Katalysatorherstellung als feinteiliges Bariumsulfat, Strontiumsulfat oder als Mischung oder Mischkristall beider Sulfate oder als deren vollständiges oder unvollständiges Zersetzungsprodukt mit einem mittleren Partikeldurchmesser von weniger als 1 $\mu$m vorliegt.

Vor der eingehenden Beschreibung der vorliegenden Erfindung werden die folgenden Definitionen getroffen:

Als Frischzustand des Speicherkatalysators wird der Zustand des Katalysators nach Abschluß der Katalysatorherstellung bezeichnet, das heißt nach Abschluß aller Fertigungsschritte inklusive einer eventuellen, abschließenden Calcinierung.

Unter einem feinteiligen Material wird ein pulverförmiges Material verstanden, das in den Katalysator als solches eingebracht wird. In der englischsprachigen Patentliteratur wird hierfür der Begriff "bulk material" oder "particulate material" verwendet. Diese Materialien werden häufig als Trägermaterialien für katalytisch aktive Komponenten oder andere hochdisperse Bestandteile des Katalysators eingesetzt. Zu diesem Zweck müssen die Trägermaterialien eine hohe spezifische Oberfläche (auch BET-Oberfläche, gemessen zum Beispiel nach DIN 66132) für die Aufnahme dieser Komponenten aufweisen. Im Rahmen dieser Erfindung werden die feinteiligen Materialien als hochoberflächig bezeichnet, wenn ihre spezifische Oberfläche mehr als 10 $m^2$/g beträgt.

Von den feinteiligen Materialien sind die hochdispersen Materialien zu unterscheiden. Hochdisperse Materialien können zum Beispiel durch Imprägnieren auf feinteiligen, hochoberflächigen Trägermaterialien abgeschieden werden. Hierzu werden die Trägermaterialien mit in der Regel wasserlöslichen Vorläuferverbindungen der hochdispersen Materialien imprägniert. Durch eine entsprechende Temperaturbehandlung werden die Vorläuferverbindungen dann in die hochdispersen Materialien überführt. Die Partikelgröße dieser hochdispersen Materialien liegt bei etwa 5 bis 50 nm. Im Falle von hochdispersem Bariumoxid auf einem Trägermaterial wurden von den Erfindern mit Hilfe von XRD-Analysen typische Partikeldurchmesser von 20 nm (0,02 $\mu$m) ermittelt.

Als Katalysatormaterialien werden im Rahmen dieser Erfindung alle Komponenten eines konventionellen Abgaskatalysators verstanden. Hierzu gehören verschiedenste Trägermaterialien sowie katalytisch aktive Komponenten, Sauerstoff speichernde Materialien und sogenannte Promotoren. Die katalytisch aktiven Komponenten und Promotoren werden gewöhnlich in hochdisperser Form auf den Trägermaterialien abgeschieden. Als katalytisch aktive Komponenten sind für die Zwecke der Erfindung die Edelmetalle der Platingruppe und hierbei insbesondere Platin, Palladium, Rhodium und Iridium geeignet. Bei den Promotoren handelt es sich gewöhnlich um Unedelmetalle, die die katalytische Aktivität der Edelmetalle modifizieren.

Als Trägermaterialien für die katalytisch aktiven Komponenten kommen die aus dem Stand der Technik bekannten, hochoberflächigen Trägermaterialien wie zum Beispiel aktives Aluminiumoxid, Ceroxid, Zirkonoxid, Titanoxid, Siliciumdioxid, Zeolithe und die Mischoxide Aluminiumsilicat und Cer/Zirkon-Mischoxide in Betracht. Die Trägermaterialien können durch Dotierung mit zum Beispiel Lanthanoxid gegenüber den thermischen Belastungen bei der Autoabgasreinigung stabilisiert sein.

Unter dem Begriff "aktives Aluminiumoxid" werden hochoberflächige Aluminiumoxide der Übergangsreihe der kristallografischen Phasen verstanden. Hierzu gehören chi-, delta-, gamma-, kappa-, theta- und eta-Aluminiumoxid. Die aktiven Aluminiumoxide weisen spezifische Oberflächen von bis zu 400 m$^2$/g auf. Bevorzugt wird gammä-Aluminiumoxid ($\gamma$-Al2O3) eingesetzt. Zur thermischen Stabilisierung können die aktiven Aluminiumoxide zum Beispiel Lanthanoxid, Bariumoxid oder Siliciumdioxid enthalten.

Mit Speicherkomponenten werden im Rahmen diese Erfindung die Elemente der Alkali- und Erdalkalimetalle bezeichnet. Bevorzugt handelt es sich dabei um Kalium, Rubidium, Cäsium, Magnesium, Calcium, Strontium und Barium. Sie bilden stark basische Oxide, die Stickstoffdioxid in Form von Nitraten binden können. Die Oxide der Speicherkomponenten werden daher auch als Speicherverbindungen oder aktive Speicherverbindungen bezeichnet. Unter dem Begriff Speicherverbindung werden hier aber auch die Reaktionsprodukte der Oxide mit Luft beziehungsweise den Abgaskomponenten zu Carbonaten und Hydroxiden verstanden, die ebenfalls in der Lage sind, Stickoxide als Nitrate zu speichern. Die Speicherfähigkeit der Speicherverbindungen ist im allgemeinen um so größer je stärker ihre Basizität ist.

Von den Speicherverbindungen sind die Speichermaterialien zu unterscheiden. Bei den Speichermaterialien handelt es sich um geträgerte Speicherverbindungen, das heißt um in hochdisperser Form auf geeigneten Trägermaterialien abgeschiedene Speicherverbindungen. Im Rahmen dieser Erfindung werden aber auch Speicherverbindungen, die in feinteiliger Form vorliegen, als Speichermaterialien bezeichnet.

Als Zersetzungsprodukte von Barium- und Strontiumsulfat werden diejenigen Verbindungen bezeichnet, die sich bei Calcinierung der Sulfate in reduzierender Atmosphäre bilden. Es handelt sich dabei vorwiegend um die Oxide, Carbonate und Hydroxide von Barium und Strontium, das heißt um aktive Speicherverbindungen.

Nach dieser Klarstellung der verwendeten Begriffe wird im folgenden die Erfindung eingehend erläutert. Es zeigen:

**Figur 1:** Schematische Darstellung eines einschichtigen Katalysators aus feinteiligen Katalysatormaterialien (3,4) und Bariumsulfat-Partikeln (5).

**Figur 2:** Schematische Darstellung eines einschichtigen Katalysators aus feinteiligen Katalysatormaterialien (3,4), Bariumsulfat-Partikeln (5) und aus hochdispersen Speicherverbindungen (6), welche durch abschließende Imprägnierung eingebracht wurden.

**Figur 3:** Schematische Darstellung eines einschichtigen Katalysators aus feinteiligen Katalysatormaterialien (3,4), Bariumsulfat-Partikeln (5) und aus hochdispersen Speicherverbindungen (7), welche durch Vorfixierung nur auf einem der beiden Katalysatormaterialien (4) abgeschieden wurden.

**Figur 4:** Schematische Darstellung eines einschichtigen Katalysators aus feinteiligen Katalysatormaterialien (3,4), Bariumsulfat-Partikeln (5), aus hochdispersen Speicherverbindungen (7), welche durch Vorfixierung nur auf einem der beiden Katalysatormaterialien (4) abgeschieden wurden und aus Speicherverbindungen (6), die durch abschließende Imprägnierung eingebracht wurden.

Der erfindungsgemäße Katalysator enthält im Frischzustand zumindest einen Teil der Speicherkomponenten in Form von feinteiligen Sulfaten. Dabei handelt es sich entweder um Bariumsulfat oder Strontiumsulfat oder um eine Mischung oder um Mischkristalle dieser beiden Materialien.

Figur 1 zeigt beispielhaft den Aufbau eines erfindungsgemäßen Katalysators, welcher in Form einer Beschichtung (2) auf einem inerten Tragkörper (1) aufgebracht wurde. Der Katalysator enthält zum Beispiel zwei verschiedene, feinteilige Katalysatormaterialien (3) und (4), von denen das Material (3) ein mit Platin aktiviertes aktives Aluminiumoxid und das Material (4) eine Sauerstoff speichernde Komponente oder ein mit Rhodium aktiviertes Cer/Zirkon-Mischoxid sein können. Die Bezugsziffer (5) bezeichnet partikelförmiges Barium- und/oder Strontiumsulfat, welches in der gesamten Katalysatorschicht verteilt ist und auch mit den Katalysatormaterialien in Kontakt steht.

Barium- und/oder Strontiumsulfat liegen im erfindungsgemäßen Katalysator in feinteiliger Form vor. Der Anteil der Speicherkomponenten an der Katalysatormasse kann deshalb wesentlich heraufgesetzt werden, da kein Trägermaterial verwendet wird, welches in der Regel kaum einen Beitrag zur Speicherkapazität des Speichermaterials liefert und somit für die Aufgabe der Speicherung der Stickoxide nur als Ballastmaterial wirkt.

Die Einbringung von Speicherkomponenten in Form von Sulfaten in den Katalysator erschien bislang widersinnig, da Sulfate nicht in der Lage sind, Stickoxide zu speichern. Die Erfindung nutzt daher die Tatsache, daß die Sulfate der Speicherkomponenten bei hohen Abgastemperaturen von mehr als 550˚C und stöchiometrisch zusammengesetztem oder fettem Abgas unter Freisetzung von Schwefeloxiden zu den entsprechenden aktiven Speicherverbindungen umgesetzt werden können. Die Sulfate der Speicherkomponenten werden also durch eine Desulfatisierung in die aktiven Speicherverbindungen überführt.

Die Desulfatisierung wird auch schon bei den bekannten Speicherkatalysatoren dazu genutzt, um die Vergiftung der Speicherkomponenten durch die im Abgas enthaltenen Schwefeloxide rückgängig zu machen. Zu diesem Zweck werden diese Betriebszustände von der Motorelektronik von Zeit zu Zeit bewußt herbeigeführt. Die für die Desulfatisierung notwendigen Abgasbedingungen treten jedoch auch im normalen Fahrbetrieb in der Regel dann auf, wenn der Motor unter leicht reduzierenden Abgasbedingungen mit Teillast beziehungsweise Vollast betrieben wird.

Daher ist es möglich, die Speicherkomponenten Barium und/oder Strontium zunächst in einer Form in den Katalysator einzubringen, in der sie nicht in der Lage sind, Stickoxide zu speichern. Durch die von der Motorelektronik von Zeit zu Zeit erzwungene Desulfatisierung oder durch entsprechende Betriebszustände des Motors werden die Sulfate langsam in die aktiven Speicherverbindungen überführt. Die Sulfate der Speicherkomponenten wirken also im Speicherkatalysator als Vorratsmaterial und als feste Vorläuferverbindungen für die aktiven Speicherverbindungen.

Der Korngröße der feinteiligen Sulfate kommt in der vorliegenden Erfindung eine besondere Bedeutung zu. Sie sollte erfindungsgemäß weniger als 1 $\mu$m, bevorzugt weniger als 0,5 $\mu$m und insbesondere weniger als 0,3 $\mu$m betragen. Besonders vorteilhaft sind Barium- oder Strontiumsulfat-Qualitäten mit Partikelgrößen unter 0,1 $\mu$m.

Die bevorzugt zu verwendenden Barium- oder Strontiumsulfat-Materialien sind also wesentlich feinteiliger als die übrigen feinteiligen Komponenten des Katalysators, die mittlere Partikeldurchmesser zwischen 1 und 5 $\mu$m aufweisen. Sie sind jedoch immer noch deutlich grobteiliger als die in hochdisperser Form aufgebrachten Speicherverbindungen. Während die hochdispersen Speicherverbindungen auf den Trägermaterialien mit mittleren Partikelgrößen von etwa 0,02 $\mu$m vorliegen, weisen die erfindungsgemäß zu verwendenden Barium- oder Strontiumsulfat-Materialien mittlere Partikeldurchmesser von mehr als 0,03 $\mu$m, bevorzugt von mehr als 0,05 $\mu$m auf. Zur Bestimmung dieser geringen Partikeldurchmesser kann zum Beispiel ein Transmissionselektronenmikroskop (TEM) herangezogen werden.

Wie Untersuchungen an Bariumsulfat gezeigt haben, bleibt die Korngröße bei der Umsetzung zu Bariumoxid, beziehungsweise Bariumcarbonat oder Bariumhydroxid durch die stabilisierende Wirkung der anderen Komponenten des Katalysators im wesentlichen erhalten.

Von der Korngröße der Speicherverbindungen hängt die für die Wechselwirkung mit dem Abgas zur Verfügung stehende Oberfläche ab. Je kleiner die Korngröße ist, um so größer ist die Oberfläche. Wird näherungsweise eine Kugelform für die Speicher-Partikel angenommen, so ist das Verhältnis ihrer Oberfläche F zu ihrem Volumen V gegeben durch

$$\frac{F}{V} = \frac{6}{D},$$

wobei D der Durchmesser der Partikel ist. In der folgenden Tabelle 1 ist dieses Verhältnis für verschiedene Radien der Partikel gezeigt. Dabei sind alle Werte auf das Verhältnis für Partikel mit einem Durchmesser von 0,02 $\mu$m normiert, da es sich hierbei um die typischen Partikelgrößen von geträgerten Speicherverbindungen handelt.

**Tabelle 1:** Oberflächen/Volumenverhältnisse

| D [$\mu$m] | $\left.\dfrac{F}{V}\right|_{D} \Big/ \left.\dfrac{F}{V}\right|_{D=0,02}$ |
|---|---|
| 0,02 | 1 |
| 0,1 | 0,2 |
| 0,25 | 0,08 |
| 0,5 | 0,04 |
| 1,0 | 0,02 |
| 5,0 | 0,004 |
| 15,0 | 0,0013 |

Diese Tabelle zeigt, daß bei Verwendung einer bestimmten Masse an Speicherverbindungen (ein bestimmtes Volumen) die zur Verfügung stehende Oberfläche mit zunehmender Partikelgröße abnimmt. Um diese Abnahme zu kompensieren muß beim Übergang von Partikeln mit Durchmessern von 0,02 $\mu$m auf Partikel mit Durchmessern von 0,1 $\mu$m die Masse der Speicherverbindungen um den Faktor 5 (1/0,2) erhöht werden. Bei Übergang zu Partikeln mit 1 $\mu$m Durchmesser muß die Masse schon um den Faktor 50 vergrößert werden, um dieselbe Wechselwirkungsfläche zur Verfügung zu stellen. Die Verwendung von feinteiligen Speicherverbindungen mit Partikeldurchmessern von mehr als 1 $\mu$m ist daher für die erfindungsgemäßen Speicherkatalysatoren nicht sinnvoll.

Die erfindungsgemäße Verwendung von feinteiligen Sulfaten als feste Vorstufe für aktive Speicherverbindungen ist von entscheidendem Vorteil gegenüber dem direkten Einsatz von pulverförmigen Speicherverbindungen gemäß der WO 97/02886 oder der EP 0 692 302 B1. Diese Vorteile gelten insbesondere für Bariumsulfat. Bariumsulfat ist ein physiologisch unbedenkliches Material. Es wird zum Beispiel in der Medizin als Röntgen-Kontrastmittel eingesetzt. Es ist in Wasser unlöslich. Als Stabilisator für Pigmentmischungen ist es im Handel in sehr feinteiliger Form mit mittleren Korndurchmessern unter 0,1 $\mu$m erhältlich. Darüber hinaus läßt es sich aufgrund seiner Neutralität hervorragend in Wasser dispergieren. Die resultierende Dispersion ist ohne Dispergierhilfsmittel über lange Zeit stabil.

Bariumsulfat wird technisch durch einen Fällungsprozeß aus Lösungen von Bariumchlorid oder Bariumsulfid gewonnen, denen unter ständigem Rühren verdünnte Schwefelsäure oder eine Natriumsulfatlösung zugegeben wird. Die Reaktionsbedingungen bestimmen die erzielbare mittlere Partikelgröße. Das für die Erfindung benötigte besonders feinteilige Bariumsulfat kann zum Beispiel durch schnelle Fällung aus hochkonzentrierten Lösungen bei hohen pH-Werten und niedrigen Temperaturen erhalten werden. Dieser Fällungsprozeß kann auch bei der Anfertigung des Katalysators "in situ" vorgenommen werden. Bei separater Anfertigung des Bariumsulfats wird das aus dem Fällungsprozeß gewonnene Bariumsulfat bevorzugt in nicht getrocknetem Zustand, das heißt in feuchter, pastöser Form eingesetzt.

Die folgende Tabelle 2 enthält beispielhaft die Eigenschaften von drei im Handel erhältlichen Qualitäten von Bariumsulfat der Firma Sachtleben Chemie GmbH, die für den erfindungsgemäßen Stickoxid-Speicherkatalysator geeignet sind.

**Tabelle 2:** Eigenschaften von Bariumsulfat-Materialien

|  |  | Sachtoperse® | | |
|  |  | HP | HU-N | HU-D |
| --- | --- | --- | --- | --- |
| Teilchengröße d$_{50}$ | [$\mu$m] | 0,2 | <0,1 | <0,1 |
| spezifische Oberfläche | [m$^2$/g] | 12 | >25 | >25 |
| pH-Wert |  | 6 | 7 | 9 |
| lösliche Bestandteile, 105°C | [%] | <0,5 | <0,5 | <0,5 |

Die oben angestellten Abschätzungen zum Oberflächen/Volumenverhältnis von Pulvermaterialien gelten strenggenommen nur für unporöse Materialien, deren spezifische Oberfläche im wesentlichen durch ihre geometrische Oberfläche gegeben ist. Dieser Sachverhalt ist bei den erfindungsgemäß zu verwendenden Sulfaten weitgehend erfüllt. Die in Tabelle 2 aufgeführten Bariumsulfat-Materialien besitzen nach Herstellerangaben eine kugelförmige Gestalt. Wie sich gezeigt hat, bleibt die Größe der Partikel aus Bariumsulfat auch nach Alterung weitgehend erhalten.

Diese vorteilhaften Eigenschaften der Sulfate weisen die von der WO 97/02886 und der EP 0 692 302 B1 vorgeschlagenen feinteiligen Verbindungen der Speicherkomponenten nicht auf. Sie sind zum Teil wasserlöslich und agglomerieren schon in der Beschichtungsdispersion zu größeren Partikeln unter Verlust an Oberfläche. Gemäß der WO 97/02886 muß die Dispergierung von Strontiumoxid in Wasser in einem Eisbad vorgenommen werden, um das Wasser vor dem Kochen infolge der Reaktionswärme zu bewahren. Die resultierende Beschichtungsdispersion ist wegen der starken Wechselwirkung der Teilchen untereinander nicht stabil und bedarf daher während der Fertigung einer besonderen Überwachung.

Darüber hinaus sind die in der WO 97/02886 vorgeschlagenen Partikeldurchmesser von 5 bis 15 $\mu$m ungeeignet. Gemäß Tabelle 1 müßte die 250- beziehungsweise 750-fache Masse an Speicherverbindungen in die Beschichtung eingebracht werden, um die gleiche Speicherkapazität wie auf Trägermaterialien abgeschiedene, hochdisperse Speicherverbindungen zur Verfügung zu stellen.

Wie schon ausgeführt, gilt der Vergleich der Oberflächen gemäß Tabelle 1 nur für unporöse Materialien. Wie durch Untersuchungen der Erfinder festgestellt wurde, weisen die in der WO 97/02886 und der EP 0 692 302 B1 vorgeschlagenen Materialien, insbesondere Bariumcarbonat und Bariumoxalat, nach Alterung bei 750°C und 10 Stunden Dauer nur noch spezifische Oberflächen unter 1 m$^2$/g auf, so daß ihre spezifische Oberfläche tatsächlich im wesentlichen nur noch durch die geometrische Oberfläche gegeben ist.

Damit der erfindungsgemäße Stickoxid-Speicherkatalysator schon im Frischzustand in der Lage ist, Stickoxide zu speichern, kann er zusätzlich zu den feinteiligen Sulfaten wenigstens eine aktive Stickoxid-Speicherverbindung aus der Gruppe der Alkali- und Erdalkalimetalle Kalium, Rubidium, Cäsium, Magnesium, Calcium, Strontium und Barium enthalten.

Diese zusätzliche Speicherverbindung kann durch Imprägnieren des Speicherkatalysators mit löslichen Vorstufen der Speicherverbindungen in den Katalysator eingebracht werden. Anschließend wird der Katalysator zur Überführung der Vorstufen in die eigentlichen Speicherverbindungen calciniert. Die zusätzlichen Speicherverbindungen werden in diesem Fall in hochdisperser Form auf allen feinteiligen Komponenten des Katalysators abgeschieden, das heißt sowohl auf den Katalysatormaterialien als auch auf Bariumsulfat beziehungsweise Strontiumsulfat. Ein solcher Katalysatoraufbau ist in Figur 2 schematisch dargestellt. Figur 2 unterscheidet sich von Figur 1 durch die zusätzliche, hochdisperse Speicherverbindung (6), die auf allen feinteiligen Komponenten des Katalysators abgeschieden ist.

Bei dieser Vorgehensweise kommen die Speicherverbindungen somit in direkten Kontakt mit den katalytisch aktiven Platingruppenmetallen, zum Beispiel mit Platin. Wie schon ausgeführt wurde, besteht dabei die Gefahr einer verstärkten Alterung bei zu hoher Beladung mit den Speicherverbindungen. Diese Art der Einbringung sollte daher für den Fall, daß der Speicherkatalysator in Form einer Beschichtung auf einen Wabenkörper aufgebracht wird, auf 20 g/l beschränkt bleiben.

Alternativ zu dieser Vorgehensweise können die zusätzlichen Speicherverbindungen auf mindestens einem der Katalysatormaterialien abgeschieden werden, bevor diese mit den anderen Komponenten des Speicherkatalysators vereinigt werden. Diese Situation ist in Figur 3 gezeigt. Die zusätzlichen, hochdispersen Speicherverbindungen (7) befinden sich hierbei nur auf der Oberfläche von Katalysatormaterial (4). Wie weiter unten ausführlich erläutert werden wird, eignen sich als Trägermaterialien für diese zusätzlichen Speicherverbindungen besonders gut hochoberflächige Katalysatormaterialien auf der Basis von Ceroxid. Nach Fertigstellung dieses Katalysators besteht die Möglichkeit, weitere Speicherverbindungen durch Imprägnieren auf allen feinteiligen Komponenten des Katalysators abzuscheiden. Der sich dabei ergebende Aufbau des Katalysators ist in Figur 4 gezeigt. Die weiteren Speicherverbindungen sind mit der Bezugsziffer (6) bezeichnet. Sie stehen, wie schon in Figur 2 gezeigt, mit allen feinteiligen Komponenten des Katalysators in engem Kontakt.

In Ergänzung oder alternativ zu diesen zusätzlichen beziehungsweise weiteren Speicherverbindungen ist es bei Ausführung des Katalysators als Beschichtungskatalysator möglich, auf den inerten Tragkörper mindestens eine weitere Beschichtung aufzubringen, die eine andere Zusammensetzung aufweisen kann als die erfindungsgemäße Speicherbeschichtung. Bevorzugt handelt es sich dabei um eine weitere Speicherbeschichtung aus wenigstens einem Katalysatormaterial und einer hochdispersen Stickoxid-Speicherverbindung. Es besteht auch die Möglichkeit, die Speicherbeschichtungen mit einer reinen Katalysatorbeschichtung zu kombinieren. Die Reihenfolge dieser Beschichtungen kann den jeweiligen Anwendungserfordernissen angepaßt werden. Die Gesamtkonzentration dieser Mehrfachschichten liegt im Rahmen der oben angegebenen Konzentrationsbereiche.

Die feinteiligen Katalysatormaterialien im erfindungsgemäßen Speicherkatalysator haben zwei Funktionen. Während der Speicherphase sollen sie unter mageren Abgasbedingungen die im Abgas enthaltenen Stickoxide zu Stickstoffdioxid oxidieren, um so ihre Abspeicherung durch die Speicherverbindungen in Form von Nitraten zu ermöglichen. Während der Regenerationsphase werden dagegen die auf dem Speicherkatalysator gespeicherten Stickoxide unter reduzierenden Abgasbedingungen wieder zu Stickoxiden zersetzt. Die freigesetzten Stickoxide werden dann an den katalytisch aktiven Komponenten des Speicherkatalysators unter Verbrauch der reduktiven Abgasbestandteile zu Stickstoff umgesetzt. Während dieser Phase ähnelt die Funktion des Speicherkatalysators der eines konventionellen Dreiwegkatalysators.

Bevorzugt enthält der erfindungsgemäße Speicherkatalysator deshalb wenigstens zwei verschiedene Katalysatormaterialien, um seine katalytische Aktivität optimal an diese Aufgaben anpassen zu können. Eines dieser Katalysatormaterialien sollte wenigstens ein Platingruppenmetall auf einem Trägermaterial aufweisen. Daneben kann als Katalysatormaterial auch eine Sauerstoff speichernde Verbindung, wie zum Beispiel Ceroxid, eingesetzt werden. Zur Erzielung einer guten Dreiwegaktivität wird bevorzugt eine Kombination von Platin auf aktivem Aluminiumoxid mit Rhodium auf einem Cer/Zirkon-Mischoxid, auf aktivem Aluminiumoxid oder auf Zirkonoxid eingesetzt. Um die beiden genannten Funktionen erfüllen zu können, sollte der Anteil der Katalysatormaterialien am gesamten Speicherkatalysator 40 bis 95 Gew.-%, bevorzugt 50 bis 70 Gew.-%, und ihr Gehalt an katalytisch aktiven Edelmetallen 0,01 bis 5 Gew.-%, bezogen auf das Gesamtgewicht des Speicherkatalysators, betragen.

Die erfindungsgemäße Einbringung der Speicherkomponenten in Form von feinteiligen Sulfaten in den Speicherkatalysator ermöglicht es, den Anteil der Speicherkomponenten an der Gesamtmasse des Speicherkatalysators gegenüber der Einbringung als hochdisperse Speicherverbindungen wesentlich zu erhöhen. Der Anteil der Speicherkomponenten kann hierbei 5 bis 60 Gew.-%, bezogen auf das Gesamtgewicht des Speicherkatalysators, jeweils berechnet als Oxide, betragen. Bevorzugt wird ein Gehalt des Speicherkatalysators an Speicherkomponenten, berechnet als Oxide, zwischen 30 und 50 Gew.-% gewählt. Durch die Verwendung von feinteiligen Sulfaten ist es zwar möglich, den Gehalt des Stickoxid-Speicherkatalysators an Speicherkomponenten noch weiter zu erhöhen, dies geht jedoch zu Lasten des Anteils an Katalysatormaterial. Oberhalb von etwa 60 Gew.-% ist der Anteil des Katalysatormaterials zu gering, um noch die einwandfreie Erfüllung der beiden Funktionen der Katalysatormaterialien gewährleisten zu können.

Für die Anwendung in der Autoabgasreinigung wird der Speicherkatalysator in Form einer Beschichtung auf inerten Tragkörpern aus Keramik oder Metall aufgebracht. Hierbei kann es sich zum Beispiel um offenporige Keramik- oder Metallschäume oder um Wabenkörper mit regelmäßig angeordneten Strömungskanälen handeln. Der Speicherkatalysator kann auf diese Tragkörper durch bekannte Techniken aufgebracht werden. Hierzu werden die Komponenten des Speicherkatalysators zum Beispiel zu einer wäßrigen Beschichtungsdispersion verarbeitet. Die Tragkörper können dann durch Eintauchen in diese Beschichtungsdispersion beschichtet werden. Nach Trocknen und gegebenenfalls Calcinieren der Beschichtung ist der Speicherkatalysator fertiggestellt.

Die Calcinierung kann bei Temperaturen bis 1000°C in oxidierender oder reduzierender Atmosphäre vorgenommen werden.

Wird die Calcinierung in reduzierender Atmosphäre durchgeführt, so werden die feinteiligen Sulfate je nach Dauer und Temperatur während der Calcinierung vollständig oder unvollständig in ihre Zersetzungsprodukte überführt. Hierbei handelt es sich um die Oxide, Carbonate und/oder Hydroxide der Speicherkomponenten, die in der Lage sind Stickoxide in Form von Nitraten zu speichern.

Die Beladungskonzentrationen des Speicherkatalysators auf den Tragkörpern betragen 50 bis 400 g/l, bevorzugt von 150 bis 320 g/l. Zur Aufbringung von hohen Beladungskonzentrationen kann es notwendig sein, den Beschichtungsvorgang mehrfach zu wiederholen, bis die gewünschte Konzentration auf dem Tragkörper erreicht ist.

Der Speicherkatalysator weist durch seinen hohen Gehalt an Speicherkomponenten auch nach hohen Temperaturbelastungen noch eine ausreichende Speicherkapazität auf. Die Alterungsstabilität kann weiter verbessert werden, wenn für die in hochdisperser Form vorliegenden Speicherverbindungen ein Trägermaterial verwendet wird, das eine verminderte Neigung zur Reaktion mit den Speicherverbindungen aufweist.

Es wurde gefunden, daß hierfür Trägermaterialien auf der Basis von Ceroxid besonders gut geeignet sind. Dabei ist reines Ceroxid weniger geeignet, da es unter reduzierenden Abgasbedingungen, wie sie im normalen Fahrbetrieb von Zeit zu Zeit auftreten und für die Regeneration der Stickoxid-Speichermaterialien bewußt eingeleitet werden, einer starken Alterung mit einem hohen Verlust an spezifischer Oberfläche unterliegt.

Gegen diese Art der Alterung kann das Ceroxid jedoch durch Dotieren mit einem Oxid der Elemente aus der Gruppe gebildet aus Silicium, Scandium, Yttrium und den Seltenerdmetallen (Lanthan, Praseodym, Neodym, Promethium, Samarium, Europium, Gadolinium, Terbium, Dysprosium, Holmium, Erbium, Thulium, Ytterbium und Luthetium) oder Mischungen ihrer Oxide stabilisiert werden. Hierzu sind 0,5 bis 20 Gew.-%, zugt 5 bis 10 Gew.-%, des jeweiligen Oxids oder der Oxidmischung notwendig. Die Konzentrationsangabe bezieht sich hierbei auf das Gesamtgewicht des stabilisierten Ceroxids. Die Dotierung kann nach an sich bekannten Verfahren, wie zum Beispiel Co-Fällen, Co-Thermohydrolyse, Imprägnieren und Auffällen, erfolgen.

Geeignete Trägermaterialien für die Speicherverbindungen sind auch Cer/Zirkon-Mischoxide, obwohl Zirkonoxid als alleiniges Trägermaterial unbrauchbar ist, da es zum Beispiel mit Bariumoxid zum Bariumzirkonat reagiert. Als Komponente eines Mischoxids mit Ceroxid ist diese Reaktion jedoch stark vermindert, da das Ceroxid das Zirkonoxid maskiert und somit eine Reaktion des Zirkonoxids mit dem Bariumoxid weitgehend unterbindet.

Cer/Zirkon-Mischoxide sind kommerziell mit einem weiten Mischungsverhältnis von Ceroxid zu Zirkonoxid erhältlich und finden ebenso wie reines Ceroxid weite Verbreitung als Sauerstoff-Speichermaterialien in konventionellen Dreiwegkatalysatoren. Die Herstellung der Cer/Zirkon-Mischoxide kann zum Beispiel über mechanisches Mischen oder Imprägnierungs- und Co-Fällungstechniken erfolgen. Im Rahmen der vorliegenden Erfindung sind die hervorragenden Eigenschaften dieser Materialien als Trägermaterialien für die Speicherverbindungen wichtig. Ihre Sauerstoff-Speicherfähigkeit ist von geringerer Bedeutung.

Besonders günstige Eigenschaften als Trägermaterialien für Speicherverbindungen weisen die Cer/Zirkon-Mischoxide dann auf, wenn der Gehalt des Mischoxides an Zirkonoxid 25 Gew.-%, bevorzugt 20 Gew.-%, bezogen auf das Gesamtgewicht des Mischoxides, nicht übersteigt. Um dem Ceroxid eine ausreichende Stabilität gegenüber reduzierenden Abgasbedingungen zu verleihen, sollte der Gehalt des Mischoxides an Zirkonoxid jedoch 1 Gew.-% nicht unterschreiten. Besonders vorteilhaft sind Zirkonoxidgehalte zwischen 5 und 15 Gew.-%. Sehr gute Ergebnisse konnten mit einem Gehalt von 10 Gew.-% Zirkonoxid erzielt werden. Oberhalb von 25 Gew.-% Zirkonoxid ist das Ceroxid nicht mehr in der Lage, das Zirkonoxid bei hohen Temperaturen vor einer Reaktion mit den Speicherkomponenten abzuschirmen. Ein Cer/Zirkon-Mischoxid mit 30 Gew.-% Zirkonoxid ist daher unter Betriebsbedingungen mit hohen Abgastemperaturen nicht mehr als Trägermaterial für die Speicherverbindungen geeignet.

Die angeführten Trägermaterialien für die Speicherverbindungen auf der Basis von Ceroxid sind, wie die einleitende Diskussion zum Stand der Technik gezeigt hat, bisher nicht bekannt geworden. Sie lassen sich erfindungsgemäß hervorragend mit den als Sulfaten eingebrachten Barium- und/oder Strontiumanteilen in einem Stickoxid-Speicherkatalysator kombinieren, um die Alterungsstabilität des Katalysators weiter zu erhöhen. Besonders vorteilhaft ist dabei auch, daß sich die auf Ceroxid abgeschiedenen Speicherverbindungen wesentlich leichter desulfatisieren lassen als es bei Verwendung anderer Trägermaterialien der Fall ist.

Die obigen Erläuterungen zur Funktionsweise des erfindungsgemäßen Speicherkatalysators zeigen, daß die Kombination von Bariumsulfat oder Strontiumsulfat mit aktiven Speicherverbindungen dazu führt, daß der Verlust des Katalysators an aktiven Speicherverbindungen durch Alterungsprozesse mehr oder weniger durch die Zersetzung von Barium- oder Strontiumsulfat kompensiert wird. Diese Sulfate wirken im Speicherkatalysator als Vorratsmaterial für die entsprechenden Speicherverbindungen. Durch die relativ große Korngröße der festen Sulfate geht die Desulfatisierung nur langsam voran, so daß auch nach längerer Betriebsdauer immer noch frische Speicherverbindungen durch Zersetzung der Sulfate nachgeliefert werden.

Es besteht jedoch auch die Möglichkeit, die Sulfate im Speicherkatalysator schon während des Produktionsprozesses ganz oder teilweise in die entsprechenden Zersetzungsprodukte und somit in eine speicheraktive Form zu überführen. Hierzu wird der beschichtete Wabenkörper bei Temperaturen bis 1000˚C, bevorzugt bei Temperaturen zwischen 550 und 800˚C, in einer reduzierenden Atmosphäre calciniert. Während der Calcination besteht die Gefahr, daß aufgrund der hohen Temperaturen eine Reaktion zwischen den Katalysatormaterialien und Barium- oder Strontiumsulfat stattfindet. Dies ist unerwünscht, da dadurch Speichermaterial verloren ginge. Gegebenenfalls müssen die Calcinationstemperaturen entsprechend angepaßt werden. Sehr gute Ergebnisse wurden zum Beispiel in reduzierender Atmosphäre bei 650 und 750˚C erzielt. Die Reduktion in Formiergas (5 Vol.-% Wasserstoff, Rest Stickstoff) ist besonders geeignet. Die Dauer der Calcinierung wird so bemessen, daß der gewünschte Desulfatisierungsgrad erreicht wird.

Es ist möglich, das gesamte Barium- und/oder Strontiumsulfat durch diese reduktive Calcinierung in die entsprechenden Speicherverbindungen zu überführen. Man erhält dann einen Speicherkatalysator, der schon im Frischzustand eine hohe Konzentration an Speicherverbindungen aufweist. Alternativ hierzu wird durch die reduktive Calcinierung nur ein bestimmter Prozentsatz der Sulfate zu den Speicherverbindungen umgesetzt. Der Rest verbleibt im Katalysator als Puffermaterial zur Kompensation der im Betrieb auftretenden Alterung.

Ein erfindungsgemäßer Speicherkatalysator, welcher im Frischzustand Barium und Strontium in Form von Sulfaten und zusätzlich Speicherverbindungen auf Trägermaterialien auf der Basis von Ceroxid enthält, weist eine ausgezeichnete Alterungsstabilität auf, da zum einen die durch Alterung deaktivierten Speicherverbindungen durch Desulfatisierung von Barium- und Strontiumsulfat kompensiert werden und zum anderen die Speicherverbindungen auf den genannten Trägermaterialien auf der Basis von Ceroxid von vornherein eine wesentlich bessere Alterungsstabilität aufweisen als die aus dem Stand der Technik bekannten Speichermaterialien.

Ein solcher Stickoxid-Speicherkatalysator zeigt wegen seines hohen Gehalts an Speicherkomponenten eine sehr gute Toleranz gegenüber den Schwefeloxiden des Abgases. Darüber hinaus lassen sich die Speicherverbindungen, die auf Trägermaterialien auf der Basis von Ceroxid abgeschieden sind, leicht desulfatisieren.

Die Erfindung wird nun an Hand von beispielhaften Formulierungen eines einschichtigen und eines zweischichtigen Stickoxid-Speicherkatalysators näher erläutert.

### Einschichtiger Speicherkatalysator:

Ein einschichtiger Speicherkatalysator gemäß der Erfindung hat im Frischzustand folgende Zusammensetzung:

**Tabelle 3**: Einschichtiger Speicherkatalysator

| Komponente | Konzentration | |
|---|---|---|
| $Pt-Al_2O_3$ | 3,0 g/l Pt auf 100 | g/l $Al_2O_3$ |
| $Rh-Al_2O_3$ | 0,3 g/l Rh auf 15 | g/l $Al_2O_3$ |
| $CeO_2$ | 50 | g/l |
| $BaSO_4$ (<0,1 $\mu$m) | 39 | g/l |
| Gesamtkonzentration | 207,3 | g/l |

Die obige Katalysatorzusammensetzung enthält als Katalysatormaterialien neben $Pt-Al_2O_3$ und $Rh-Al_2O_3$ noch $CeO_2$. Der Zusatz von Ceroxid erleichtert die Desulfatisierung des Bariumsulfats und verbessert die Dreiwegaktivität des Speicherkatalysators. Bei dem für $Pt-Al_2O_3$ und $Rh-Al_2O_3$ verwendeten Aluminiumoxid handelt es sich um ein aktives Aluminiumoxid mit einer spezifischen Oberfläche von 140 $m^2$/g,

Zum Aufbringen dieser Beschichtung auf einen Wabenkörper wird zunächst eine Beschichtungsdispersion mit den Katalysatormaterialien hergestellt. Bevorzugt handelt es sich dabei um eine wäßrige Dispersion. Die Dispersion wird vermahlen, so daß die mittlere Teilchengröße der Feststoffe in einem Bereich zwischen 2 und 4 $\mu$m liegt. Diese Teilchengröße gewährleistet eine gute Haftung der Beschichtung auf dem Wabenkörper. Erst nach dem Vermahlen der Beschichtungsdispersion wird das feinteilige Bariumsulfat in pastöser Form in die Dispersion eingerührt. Ein erneutes Vermahlen ist nicht notwendig, da das verwendete Bariumsulfat in der Beschichtungsdispersion nicht zur Agglomeration neigt.

Die Wabenkörper werden zum Beispiel durch Eintauchen in diese Beschichtungsdispersion mit dem Stickoxid-Speicherkatalysator beschichtet. Danach wird die Beschichtung im allgemeinen bei erhöhter Temperatur von bis etwa 150°C getrocknet und anschließend zur Fixierung der Beschichtung bei einer Temperatur bis 1000°C, bevorzugt bei einer Temperatur im Bereich von 300 bis 600°C, an Luft calciniert. Wird eine Teil-Desulfatisierung des frischen Katalysators gewünscht, so kann die Calcinierung bei einer Temperatur bis 1000°C, bevorzugt bei einer Temperatur im Bereich von 550 bis 800°C in einer reduzierenden Atmosphäre vorgenommen werden. Hierfür eignet sich zum Beispiel Formiergas.

Der Katalysator von Tabelle 3 enthält 39 g/l Bariumsulfat. Dies entspricht 27,3 g/l Bariumoxid. Die Beschichtung weist eine Gesamtkonzentration von 195,6 g/l auf, wobei der Anteil des Bariums, berechnet als Oxid, 14 Gew.-%, bezogen auf das Gesamtgewicht der Beschichtung beträgt.

Die in Tabelle 3 angegebene Gesamtkonzentration der Beschichtung läßt sich noch in einem Beschichtungsvorgang auf einem Wabenkörper aufbringen. Um dieselbe Menge an Bariumoxid in den Katalysator als geträgertes Speichermaterial mit 20 Gew.-% Bariumoxid in die Beschichtung einzubringen, müßte die Gesamtkonzentration auf 304,8 g/l erhöht werden, was mit erheblichen Fertigungsproblemen verbunden wäre. Die mögliche Alternative, die benötigte Menge an Bariumoxid durch Imprägnieren mit einer löslichen Vorläuferverbindung in den Speicherkatalysator einzubringen, scheidet hier wegen der Beeinträchtigung der katalytisch aktiven Komponenten durch den engen Kontakt mit großen Mengen an Bariumoxid aus.

### Zweischichtiger Speicherkatalysator:

Tabelle 4 zeigt die mögliche Zusammensetzung eines zweischichtigen Speicherkatalysators gemäß der Erfindung:

**Tabelle 4:** Zweischichtiger Speicherkatalysator

| Komponente | Konzentration | | |
|---|---|---|---|
| 2. Schicht | | | |
| $Pt-Al_2O_3$ | 1,5 g/l Pt auf | 50 | g/l $Al_2O_3$ |
| $Rh-Al_2O_3$ | 0,3 g/l Rh auf | 15 | g/l $Al_2O_3$ |
| $CeO_2$ | | 20 | g/l |
| $BaSO_4$ (<0,1 $\mu$m) | | 35 | g/l |
| 1. Schicht | | | |
| $Pt-Al_2O_3$ | 1,5 g/l Pt auf | 50 | g/l $Al_2O_3$ |
| $Ba-Ce/ZrO_2$ | 20 g/l BaO auf | 110 | g/l $Ce/ZrO_2$*) |
| Gesamtkonzentration | | 303,3 | g/l |
| *): Cer/Zirkonmischoxid mit 10 Gew.-% Zirkonoxid | | | |

Die erste Schicht in der obigen Tabelle wird direkt auf den Wabenkörper aufgebracht. Die zweite Schicht steht mit dem Abgas in Kontakt. In der Beschichtungszusammensetzung nach Tabelle 4 müßte die Gesamtkonzentration der Beschichtung auf über 400 g/l erhöht werden, wollte man das Bariumsulfat durch eine äquivalente Menge an geträgertem Bariumoxid ersetzen. Eine solche Beschichtungskonzentration wäre nur mit sehr großen Fertigungsproblemen herstellbar.

Der hier beschriebene Katalysator wird in seinen verschiedenen Ausführungsformen zur Abgasreinigung von Magermotoren verwendet. Diese Motoren werden zur Kraftstoffeinsparung während ihrer überwiegenden Betriebsdauer mit einem mageren Luft/Kraftstoff-Gemisch betrieben. Während der Betriebsphasen mit mageren Abgaszusammensetzungen (Speicherphase) werden die im Abgas enthaltenen Stickoxide an den Speicherverbindungen des erfindungsgemäßen Katalysators gebunden. Während Betriebsphasen mit fetter Abgaszusammensetzung (Desorptionsphase) werden die gespeicherten Stickoxide unter den dann reduzierenden Abgasbedingungen desorbiert und umgesetzt. Dieser wiederkehrende Wechsel von mageren und fetten Abgaszusammensetzungen kann je nach Motorkonzept entweder durch wechselnde Fahrbedingungen hervorgerufen oder von der Motorsteuerung periodisch eingeleitet werden. Im letzteren Fall beträgt die Dauer der Speicherphase beispielsweise 60 bis 120 Sekunden. Nach jeder Speicherphase wird das Luft/Kraftstoffgemisch von der Motorsteuerung zur Desorption und Umsetzung der Stickoxide kurzzeitig in seiner Zusammensetzung auf stöchiometrisch beziehungsweise fett umgeschaltet.

Die Desulfatisierung und damit Aktivierung der in Sulfatform in den Katalysator eingebrachten Speicherkomponenten erfolgt entweder während "natürlich" vorkommender Desulfatisierungsbedingungen im Abgas (über 550°C und fettes Abgas) oder während der von der Motorsteuerung ebenfalls periodisch eingeleiteten Desulfatisierung des Katalysators. Wie ausgeführt wurde, können die Sulfate auch schon während des Herstellprozesses in die aktiven Speicherverbindungen überführt werden, wenn während des Betriebs des Motors nicht mit ausreichenden Desulfatisierungsphasen gerechnet werden kann.

Obwohl mit dem beschriebenen Katalysator gemäß der Erfindung schon allein sehr gute Reinigungsergebnisse erzielt werden, kann er in bekannter Weise mit weiteren Katalysatoren kombiniert werden. Insbesondere kann dem Katalysator ein motornaher Startkatalysator vorgeschaltet werden, um die Abgasreinigung während der Kaltstartphase zu verbessern. Ebenso können dem Katalysator zusätzliche Abgaskatalysatoren zur weiteren Verminderung von Kohlenwasserstoff-, Kohlenmonoxid- und Stickoxidemissionen nachgeschaltet werden. Welche Konfiguration schließlich gewählt wird, hängt entscheidend vom Motortyp und seinem bevorzugten Einsatzgebiet ab.

**Patentansprüche**

1. Verwendung eines Stickoxid-Speicherkatalysators für die Behandlung des Abgases eines mager betriebenen Verbrennungsmotors mit wechselnder magerer und fetter Abgaszusammensetzung, wobei der Stickoxid-Speicherkatalysator wenigstens ein feinteiliges Katalysatormaterial mit einem mittleren Partikeldurchmesser zwischen 1 und 5 $\mu$m, ausgewählt aus katalytisch aktiven Komponenten, Trägermaterialien, Sauerstoff speichernden Materialien und Promotern, sowie wenigstens eine Stickoxid-Speicherkomponente enthält, wobei die Stickoxid-Speicherkomponente nach Abschluß der Katalysatorherstellung als feinteiliges Bariumsulfat, Strontiumsulfat oder als Mischung oder Mischkristall beider Sulfate oder als deren vollständiges oder unvollständiges Zersetzungsprodukt mit einem mittleren Partikeldurchmesser von weniger als 1 $\mu$m vorliegt.

2. Verwendung nach Anspruch 1, wobei der Stickoxid-Speicherkatalysator zusätzlich wenigstens eine Speicherverbindung einer Stickoxid-Speicherkomponente aus der Gruppe der Alkali- und Erdalkalimetalle Kalium, Rubidium, Cäsium, Magnesium, Calcium, Strontium und Barium enthält.

3. Verwendung nach Anspruch 2, wobei die zusätzliche Speicherverbindung in hochdisperser Form auf allen feinteiligen Bestandteilen des Speicherkatalysators vorliegt.

4. Verwendung nach Anspruch 2, wobei als Trägermaterial für die zusätzliche Speicherverbindung Ceroxid, Ceroxid, welches mit einem Oxid der Elemente aus der Gruppe bestehend aus Silicium, Scandium, Yttrium und den Seltenerdmetallen oder Mischungen ihrer Oxide dotiert ist, oder Cer/Zirkon-Mischoxid eingesetzt wird, wobei die zusätzliche Speicherverbindung in hochdisperser Form auf dem Trägermaterial vorliegt.

5. Verwendung nach Anspruch 4, wobei eine weitere Speicherverbindung in hochdisperser Form auf allen feinteiligen Bestandteilen des Speicherkatalysators vorliegt.

6. Verwendung nach Anspruch 1, wobei das Katalysatormaterial Platin auf aktivem Aluminiumoxid und Rhodium auf einem Cer/Zirkon-Mischoxid, auf einem aktiven Aluminiumoxid oder auf Zirkonoxid enthält.

7. Verwendung nach Anspruch 1, wobei der Stickoxid-Speicherkatalysator die wenigstens eine Stickoxid-Speicherkomponente in einer Menge bis 60 Gew.-%, bezogen auf das Gesamtgewicht des Stickoxid-Speicherkatalysators und jeweils berechnet als Oxid, enthält.

8. Verwendung nach einem der vorstehenden Ansprüche, wobei der Stickoxid-Speicherkatalystaor in Form einer Beschichtung auf einem inerten Wabenkörper aus Keramik oder Metall vorliegt.

9. Verwendung nach Anspruch 8, wobei der Wabenkörper mindestens eine weitere, von der Beschichtung nach Anspruch 8 verschiedene, Beschichtung enthält.

10. Verwendung nach Anspruch 9, wobei die weitere Beschichtung neben wenigstens einem Platingruppenmetall auf aktivem Aluminiumoxid noch wenigstens eine Speicherverbindung auf einem Trägermaterial auf der Basis von Ceroxid enthält.

11. Verwendung nach Anspruch 10, wobei das Trägermaterial für die Speicherverbindung ein Cer/Zirkon-Mischoxid mit einem Zirkonoxidgehalt zwischen 1 und 25 Gew.-%, berechnet als Oxid und bezogen auf das Gesamtgewicht des Mischoxids, ist.

**12.** Verwendung Anspruch 11, wobei es sich bei der Speicherverbindung auf dem Cer/Zirkon-Mischoxid um eine Verbindung des Bariums, Strontiums oder Mischungen davon handelt.

**13.** Verwendung nach Anspruch 9, wobei die Beschichtungen mit einer Gesamt-Konzentration von 50 bis 400 g/l auf dem inerten Wabenkörper vorliegen.

**Claims**

**1.** Use of a nitrogen oxide storage catalyst for the treatment of exhaust gas of a leanly operated combustion engine with alternating lean and rich exhaust gas composition, wherein the nitrogen oxide storage catalyst contains at least one fine particulate catalyst material having an average particle diameter between 1 and 5 $\mu$m, selected from catalytically active components, support materials, oxygen storage materials and promoters, as well as at least one nitrogen oxide storage component, wherein the nitrogen oxide storage component is present after completion of the catalyst preparation as a fine particulate barium sulphate, strontium sulphate or as a mixture or a mixed crystal of both sulphates or as a complete or partial degradation product thereof having an average particle diameter of less than 1 $\mu$m.

**2.** The use of claim 1, wherein the nitrogen oxide storage catalyst additionally contains at least one storage compound of a nitrogen oxide storage component selected from the group of the alkali and earth alkali metals potassium, rubidium, cesium, magnesium, calcium, strontium and barium.

**3.** The use of claim 2, wherein the additional storage compound is present in a highly dispersed form on all fine particulate components of the storage catalyst.

**4.** The use of claim 2, wherein cerium oxide, cerium oxide which is doped with an oxide of the elements of the group consisting of silicon, scandium, yttrium and the rare earth metals or mixtures of oxides thereof, or cerium/zirconium mixed oxide is used as a support material for the additional storage compound, wherein the additional storage compound is present in a highly dispersed form on the support material.

**5.** The use of claim 4, wherein a further storage compound is present in a highly dispersed form on all fine particulate components of the storage catalyst.

**6.** The use of claim 1, wherein the catalyst material contains platinum on activated aluminum oxide and rhodium on a cerium/zirconium mixed oxide, on an activated aluminium oxide or on zirconium oxide.

**7.** The use of claim 1, wherein the nitrogen oxide storage catalyst contains the at least one nitrogen oxide storage component in an amount of up to 60 wt.-%, based on the total weight of the nitrogen oxide storage catalyst and calculated as the oxide, respectively.

**8.** The use of any of the preceding claims, wherein the nitrogen oxide storage catalyst is present in the form of a coating on an inert honeycomb of ceramic or metal.

**9.** The use of claim 8, wherein the honeycomb contains at least one further coating different from the coating of claim 8.

**10.** The use of claim 9, wherein the further coating, in addition to at least one platinum group metal on activated aluminum oxide, further contains at least one storage compound on a support material based on cerium oxide.

**11.** The use of claim 10, wherein the support material for the storage compound is a cerium/zirconium mixed oxide having a zirconium oxide content between 1 and 25 wt.-%, calculated as the oxide and based on the total weight of the mixed oxide.

**12.** The use of claim 11, wherein the storage compound on the cerium/zirconium mixed oxide is a compound of barium, strontium or mixtures thereof.

**13.** The use of claim 9, wherein the coatings are present on the inert honeycomb at a total concentration of 50 to 400 g/l.

EP 0 993 860 B1

**Revendications**

**1.** Utilisation d'un catalyseur accumulateur d'oxydes d'azote pour le traitement des gaz d'échappement d'un moteur à combustion interne alimenté avec un mélange pauvre, ayant des compositions en alternance pauvres et riches des gaz d'échappement, ce catalyseur accumulateur des oxydes d'azote contenant au moins un matériau catalyseur finement divisé d'une granulométrie moyenne située entre 1 et 5 micron(s), choisi parmi des composants catalytiquement actifs, des matériaux supports, des matériaux accumulant l'oxygène et des promoteurs ainsi qu'au moins un composant accumulateur d'oxydes d'azote,
selon laquelle le composant accumulateur d'oxydes d'azote se présente après la fabrication du catalyseur terminée, sous forme de sulfate de baryum, sulfate de strontium finement divisé, ou comme mélange ou cristal mixte des deux sulfates, ou comme leur produit de décomposition complet ou incomplet, d'une granulométrie moyenne inférieure à 1 micron.

**2.** Utilisation selon la revendication 1, le catalyseur accumulateur d'oxydes d'azote contenant au moins un composé accumulateur supplémentaire d'un composant accumulateur d'oxyde d'azote appartenant au groupe des métaux alcalins et alcalino-terreux, potassium, rubidium, césium, magnésium, calcium, strontium et baryum.

**3.** Utilisation selon la revendication 2, le composé accumulateur supplémentaire étant présent sous forme très dispersée sur tous les constituants finement divisés du catalyseur accumulateur.

**4.** Utilisation selon la revendication 2, dans laquelle on utilise, comme matière support pour le composé accumulateur supplémentaire, de l'oxyde de cérium, de l'oxyde de cérium dopé avec un oxyde des éléments appartenant au groupe constitué du silicium, du scandium, de l'yttrium et des métaux de terres rares ou des mélanges de leurs oxydes, ou un oxyde mixte cérium/zirconium, le composé accumulateur supplémentaire étant présent sous forme très dispersée sur le matériau support.

**5.** Utilisation selon la revendication 4, dans laquelle un autre composé accumulateur est présent sous forme très dispersée sur tous les constituants finement divisés du catalyseur accumulateur.

**6.** Utilisation selon la revendication 1, dans laquelle le matériau catalyseur contient du platine sur un oxyde d'aluminium actif et du rhodium sur un oxyde mixte cérium/zirconium, sur un oxyde d'aluminium actif ou sur l'oxyde de zirconium.

**7.** Utilisation selon la revendication 1, dans laquelle le catalyseur accumulateur d'oxydes d'azote contient au moins l'un composant accumulateur d'oxydes d'azote dans une proportion allant jusqu'à 60 % en poids, rapporté au poids total du catalyseur accumulateur d'oxydes d'azote et calculé à chaque fois en oxyde.

**8.** Utilisation selon l'une quelconque des revendications précédentes, dans laquelle le catalyseur accumulateur d'oxydes d'azote se présente sous la forme d'un revêtement sur un corps inerte en nid d'abeilles constitué de céramique ou de métal.

**9.** Utilisation selon la revendication 8, dans laquelle le corps en nid d'abeilles contient au moins un autre revêtement différent du revêtement selon la revendication 8.

**10.** Utilisation selon la revendication 9, dans laquelle l'autre revêtement contient en plus d'au moins un métal du groupe du platine sur un oxyde d'aluminium actif, encore au moins un composé accumulateur sur un matériau support à base d'oxyde de cérium.

**11.** Utilisation selon la revendication 10, dans laquelle le matériau support pour le composé accumulateur est un oxyde mixte cérium/zirconium contenant une teneur en oxyde de zirconium située entre 1 et 25 % en poids, calculée en oxyde et rapportée au poids total de l'oxyde mixte.

**12.** Utilisation selon la revendication 11, dans laquelle le composé accumulateur sur l'oxyde mixte cérium/zirconium est un composé du baryum, du strontium ou de leurs mélanges.

**13.** Utilisation selon la revendication 9, dans laquelle les revêtements sont présents à une concentration totale de 50 à 400 g/l sur le corps inerte en nid d'abeilles.

15